## Europäisches Patentamt
## European Patent Office
## Office européen des brevets

(19)

(11) Numéro de publication: **0 044 250**
**B1**

(12) **FASCICULE DE BREVET EUROPEEN**

(45) Date de publication du fascicule du brevet: **23.01.85**

(51) Int. Cl.⁴: **H 04 N 3/10**

(21) Numéro de dépôt: **81401092.2**

(22) Date de dépôt: **07.07.81**

(54) **Système d'affichage sur écran plat à balayage bidimensionnel à ondes élastiques.**

(30) Priorité: **10.07.80 FR 8015736**

(43) Date de publication de la demande:
**20.01.82 Bulletin 82/3**

(45) Mention de la délivrance du brevet:
**23.01.85 Bulletin 85/4**

(84) Etats contractants désignés:
**DE GB NL**

(56) Documents cités:
**EP - A - 0 009 436**
**FR - A - 2 308 263**

**ELECTRONICS LETTERS, vol. 16, no. 1, 3 janvier 1980 Londres, GB A.B. SHERMAN et al.: "Nonlinear acoustoelectroluminescence"**

(73) Titulaire: **Feldmann, Michel, 45, rue Saint Lambert, F-75015 Paris (FR)**
Titulaire: **Le Goff, Jeannine, épouse Henaff, 3ter, Place Marquis, F-92140 Clamart (FR)**

(72) Inventeur: **Feldmann, Michel, 45, rue Saint Lambert, F-75015 Paris (FR)**
Inventeur: **Le Goff, Jeannine, épouse Henaff, 3ter, Place Marquis, F-92140 Clamart (FR)**

(74) Mandataire: **Le Guen, Louis François, 13, rue Emile Bara BP 91, F-35802 Dinard Cedex (FR)**

# Description

La présente invention concerne un système d'affichage sur écran plat utilisant un balayage bidimensionnel par ondes élastiques de surface.

Dans le brevet FR-A-2 308 263, on a décrit un procédé de balayage bidimensionnel d'une image projetée sur un film semiconducteur au moyen de trois ondes élastiques de surface lancées à la surface d'un substrat piézoélectrique sous-jacent, les directions des trois ondes de surface n'étant pas colinéaires deux à deux. L'interaction non linéaire des trois ondes, aux points où elles sont en phase, produit une onde élastique dont la fréquence est la somme des fréquences des trois ondes élastiques initiales et dont l'amplitude est fonction de la lumière projetée en ces points sur le film semiconducteur. Dans la réalisation d'une caméra utilisant ce procédé, on utilise des générateurs de signaux qui délivrent aux transducteurs les signaux nécessaires pour engendrer les trois ondes élastiques de surface initiales et un circuit de sortie accordé sur la fréquence du signal d'interaction et relié à une paire d'électrodes dont l'une est au-dessus et l'autre au-dessous du substrat piézoélectrique.

Dans la demande de brevet EP-A-0 009 436, est également décrit un dispositif de lecture à ondes élastiques de surface utilisant un balayage bidimensionnel mettant en oeuvre quarte ondes élastiques lancées sur un substrat piézoélectrique associé à un milieu semiconducteur et photosensible, sur lequel est projetée une image optique. Dans ce document, deux des quatres ondes de surface sont lancées suivant une première direction Ox et les deux autres sont lancées suivant une autre direction Oy, perpendiculaire à la première.

Dans l'article technique intitulé »Nonlinear acoustoélectroluminescence« de A. B. Sherman, A. A. Dobrovolsky et V. V. Lemanov, paru dans la revue technique »ELECTRONICS LETTERS« du 3 janvier 1980, Vol. 16, N° 1, pages 37 et 38, on a décrit l'interaction d'une onde de surface acoustique se propageant à la surface d'un milieu piézoélectrique sur laquelle est déposée une couche de poudre de matière électroluminophore. La variation de l'intensité de la luminescence en fonction de l'amplitude des ondes élastiques de surface présente une non linéarité importante. Il en résulte que la luminescence peut être modulée par des fréquences qui sont des harmoniques de la fréquence des ondes élastiques des surface. De plus, comme la brillance est fonction du module du champ d'ondes de surface, ces fréquences doivent être des harmoniques pairs.

Dans des expériences décrites dans l'article mentionné ci-dessus, on a utilisé comme milieu piézoélectrique, d'une manière classique, un substrat de niobate de lithium et, comme poudres luminophores, du phosphure de gallium ou du carbure de silicium.

Un objet de la présente invention consiste à prévoir un système d'affichage sur écran bidimensionnel qui utilise un procédé de balayage à ondes élastiques de surface dérivé de ceux qui ont été décrits dans le brevet FR-A-2 308 263 et le document EP-A-0 009 436, déjà mentionnés ci-dessus, et une interaction entre les ondes élastiques de surface du balayage et une poudre luminophore non linéaire. Plus particulièrement, il y est prévu d'utiliser quarte ondes élastiques de surface, comme dans le document EP-A-0 009 436, mais lancées dans des conditions complétement différentes.

L'objet de l'invention mentionné ci-dessus, ainsi que d'autres, sont atteints par la mise en oeuvre des combinaisons de moyens définies dans la partie caractérisante de la revendication principale, complétée par les revendications dépendantes.

Il faut noter que le système permet accessoirement de désigner un point de l'image pour mesurer ses coordonnées et donc obtenir un écran interactif.

Les objets et les caractéristiques de l'invention apparaîtront clairement à la lecture de la description suivante d'un exemple de réalisation, ladite description étant faite en relation avec les dessins joints, parmi lesquels:

la Fig. 1 est une vue schématique en perspective d'un système d'affichage sur écran plat, suivant l'invention,

la Fig. 2 est une vue très schématique permettant d'illustrer comment les ondes acoustiques interagissent à la surface de l'écran de la Fig. 1,

la Fig. 3 est un bloc-diagramme d'un système d'affichage comprenant l'écran de la Fig. 1,

la Fig. 4 est une vue schématique d'un dispositif capable d'engendrer l'avance nécessaire au modulateur du système de la Fig. 3, et

la Fig. 5 est une vue schématique d'un système d'affichage trichrome, suivant l'invention.

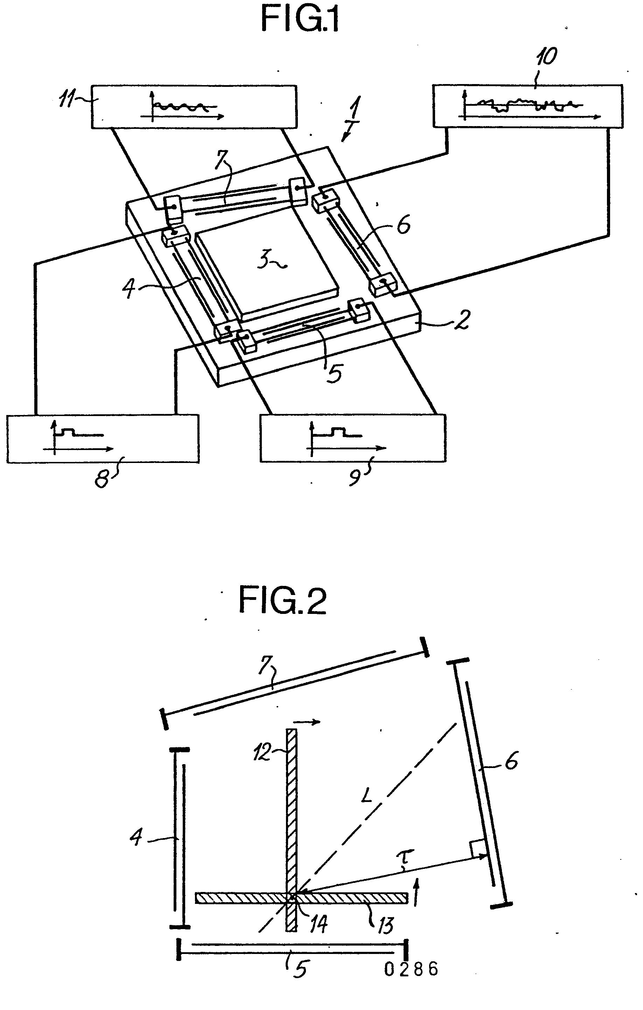

Le système d'affichage de la Fig. 1 comprend un écran plat 1 qui est formé d'un substrat piézoélectrique 2, sur la surface duquel est déposée une poudre piézoluminophore 3. Sur la surface du substrat 2, autour de la couche de poudre 3, sont prévus quatre transducteurs 4 à 7, qui sont capables, d'une manière classique, d'émettre des ondes élastiques de surface dans les directions de leurs normales respectives, ou voisines de celle-ci si le matériau est anisotrope.

Les transducteurs 4 et 5 sont, en général, perpendiculaires entre eux, alors que les directions des transducteurs 6 et 7 sont quelconques, à la condition de ne pas être colinéaires avec les transducteurs 4 et 5, ni entre eux. Les transducteurs 4 à 7 ont des dimensions telles que les largeurs des pistes, le long desquelles ils lancent ondes élastiques, recouvrent la surface utile de l'écran d'affichage. Les bornes d'entrée des transducteurs 4 à 7 sont respectivement reliées aux sorties de générateurs de signaux 8 à 11.

Plus particulièrement, dans l'exemple décrit, le matériau du substrat 2 est isotrope, comme un verre ou mieux une céramique piézoélectrique ou encore un plastique piézoélectrique, ou anisotrope, comme un cristal piézoélectrique, tel qu'un cristal de quartz, de niobate de lithium, de berlinite ($AlPO_4$), de $Bi_{12}GeO_{20}$, ou de $Bi_{12}SeO_{20}$.

La couche piézoluminophore 3 peut être constituée de phosphure de gallium ou de carbure de silicium, ou d'autres phosphores utilisés en télévision.

Si l'on se réfère à la Fig. 2, qui ne représente schématiquement que la surface du substrat 2, le générateur 8 délivre au transducteur 4 un signal en forme d'impulsions et de pulsation $\omega_1$ avec une période de répétition T, le générateur 9 délivre au transducteur 5 un signal en forme d'impulsions et de pulsation $\omega_2$ avec une période de répétition légèrement différente T + $\Delta$T, le générateur 11 délivre au transducteur 7 un signal d'amplitude constante et de pulsation $\omega_4$, tandis que le générateur 10 délivre au transducteur 6 un signal d'amplitude modulée par l'information et de pulsation $\omega_3$. Les largeurs des impulsions délivées par les générateurs 8 et 9 sont égales.

En se référant à la Fig. 2, on suppose que les impulsions 12 et 13 ont été émises au même instant. Donc, au moment t, dans une zone élémentaire 14 qui se trouve approximativement sur la bissectrice de l'angle des transducteurs 4 et 5, on a une interaction entre ces impulsions de pulsations $\omega_1$ et $\omega_2$, ainsi qu'avec l'onde continue, non représentée, émise par 6 et l'onde continue de pulsation $\omega_4$, non représentée, émise par 7. Le signal d'interaction a une pulsation $\omega_0$ qui vérifie la relation suivante:

$$\omega_0 = \omega_1 + \omega_2 + \omega_3 + \omega_4 \qquad (1)$$

Si l'on désigne les directions de propagation des ondes émises par les transducteurs 4, 5 et 6 par $\vec{a}_1$, $\vec{a}_2$ et $\vec{a}_3$, où $\vec{a}_1$ et $\vec{a}_2$ sont orthogonales, le vecteur $\vec{k}_4$, qui vérifie la relation suivante:

$$\vec{k}_4 = -(\omega_1\vec{a}_1 + \omega_2\vec{a}_2 + \omega_3\vec{a}_3) \qquad (2)$$

définit la direction $\vec{a}_4$ et la pulsation $\omega_4$ de l'onde à émettre par 7 par la relation suivante:

$$\omega_4 = \vec{k}_4/\vec{a}_4 \qquad (3)$$

Soit $A_1$, $A_2$, $A_3$ et $A_4$, les amplitudes des ondes respectivement émises par les transducteurs 4 à 7, où $A_1$ et $A_2$ sont des amplitudes d'impulsions, $A_4$ une amplitude constante et $A_3$ une amplitude modulée, le point 14, balayé à l'instant t, aura une amplitude élastique A:

$$A = A_1 + A_2 + A_3 (t - \tau) + A_4 \qquad (4)$$

tandis que les autres points ont une amplitude $A_1 + A_3 + A_4$, ou $A_2 + A_3 + A_4$, ou zéro. Dans la relation précédente, $\tau$ est le retard dû à la propagation de l'onde entre le transducteur 6 et le point 14. Si la réponse de la poudre piézoluminophore 3 est très non linéaire, la luminescence des points que le point balayé 14 sera négligeable. Par contre, la pulsation de l'onde $\omega_4$ sera choisie pour que la luminescence du point balayé soit la plus favorable.

Bien entendu, quand le temps t varie, le point 14 se déplace le long de la ligne L. Par ailleurs, le décalage entre les impulsions successives émises respectivement par 4 et 5 varie d'une période à une autre de sorte que la ligne L se déplace. La période des impulsions émises par 4 est, par exemple, légèrement plus longue, avec $\Delta$T positif, que celles des impulsions émises par 4 et la période qui suit l'émission synchrone décrite ci-dessus, verra l'émission de 5 légèrement retardée par rapport à celle de 4. Donc, dans cette période suivante, la zone d'interaction 14 va décrire une ligne parallèle à L mais légèrement décalée vers la droite. Il apparaît donc que la surface utile est balayée par lignes successives. La différence de période $\Delta$T permet de définir la définition du balayage.

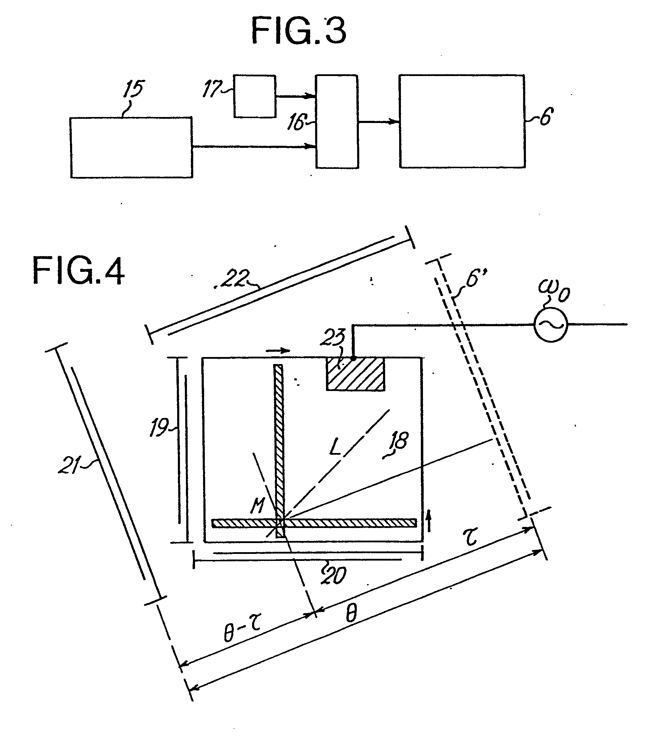

Comme on l'a décrit ci-dessus, la luminescence à engendrer à l'instant t au point 13 résulte de l'amplitude $A_3$ de l'onde émise par 6 à l'instant $(t - \tau)$. En fonction de la lenteur de l'onde lancée par 6 et de la position du point à balayer, il faut donc déterminer l'avance que l'on doit appliquer à la modulation. La détermination de l'avance peut, bien entendu, être effectuée par des moyens de calcul de retard dont l'entrée reçoit la modulation avec une avance fixe et dont les paramètres de calcul sont fixés par la lenteur de l'onde émise par 6 et la vitesse relative de balayage du point 14 par rapport au transducteur 6. Toutefois, la détermination de cette avance peut être obtenue par des moyens analogiques simples, comme on va le décrire en relation avec la Fig. 3.

A la Fig. 3, on a représenté le bloc-diagramme d'un système complet d'affichage, suivant l'invention. Un dispositif fonctionnant en caméra 15, du type de la caméra décrite dans le brevet français 2 308 263 déjà cité, a sa sortie reliée à l'entrée de porteuse d'un modulateur 16 dont la seconde entrée est reliée à la source 17 de signal modulant. La sortie du modulateur 16 est reliée au transducteur 6 d'un écran 1.

La Fig. 4 représente schématiquement la surface du substrat 18 de la caméra 15, sur laquelle sont prévus quatre transducteurs 19 à 22. Au-dessus et au-dessous du substrat 18, sont disposées des électrodes, dont l'une est partiellement montrée en 23. Les transducteurs 19, 20 et 22 occupent sur le substrat 18 des positions relatives identiques à celles qu'occupent les transducteurs 4, 5 et 7 sur le substrat 2 de l'écran 1. On a représenté en 6', Fig. 4, la position correspondant à celle qu'occupe le transducteur 6 sur 2. Le transducteur 21 est parallèle à 6', mais est disposé de l'autre côté de la zone active de la surface de 18 par rapport à 6'.

Les transducteurs 19, 20 et 22 sont respectivement reliés à des sources de signaux de pulsations respectives $\omega_1$, $\omega_2$ et $\omega_4$. Les électrodes 23 sont reliées aux bornes de sortie d'une source de pulsation $\omega_0$, tel que défini par la relation (1).

Les source, non montrées, alimentent les transducteurs 19 et 20 fonctionnent en impulsion et sont synchrones avec les sources 8 et 9. Les sources, non montrées, alimentent le transducteur 22

et les électrodes 23 fonctionnent en continu.

Le balayage est produit par les deux transducteurs 19 et 20 le long d'une ligne L, correspondant à la ligne L de la Fig. 2. Etant donné l'émission de 22 et l'application de la pulsation $\omega_0$ par 23, on a un accord de phase au point balayé M qui va réémettre vers l'arrière, c'est à dire vers le transducteur 21 avec une pulsation $\omega_3$. L'onde recueillie sur 21 à un retard $(\Theta - \tau)$, où $\Theta$ est le temps constant de propagation entre la position 6' et le transducteur 21.

Le signal recueilli par 21 est modulé dans 16 par le signal à afficher sur l'écran et le signal ainsi modulé est appliqué au transducteur 6.

Si l'on considère le point M balayé à l'instant t, le signal recueilli par 21 au même instant correspond au signal du point balayé à l'instant $(t + \Theta - \tau)$. Si on retarde les signaux de sortie des sources pulsées 8 et 9 de $\Theta$, le point M correspondant de l'écran 1 est balayé à l'instant $(t + \Theta)$.

Autrement dit, le transducteur 6 lance un signal à l'instant $(t + \Theta - \tau)$ pour un point balayé à l'instant $(t + \Theta)$, c'est à dire exactement avec l'avance $\tau$ désirée.

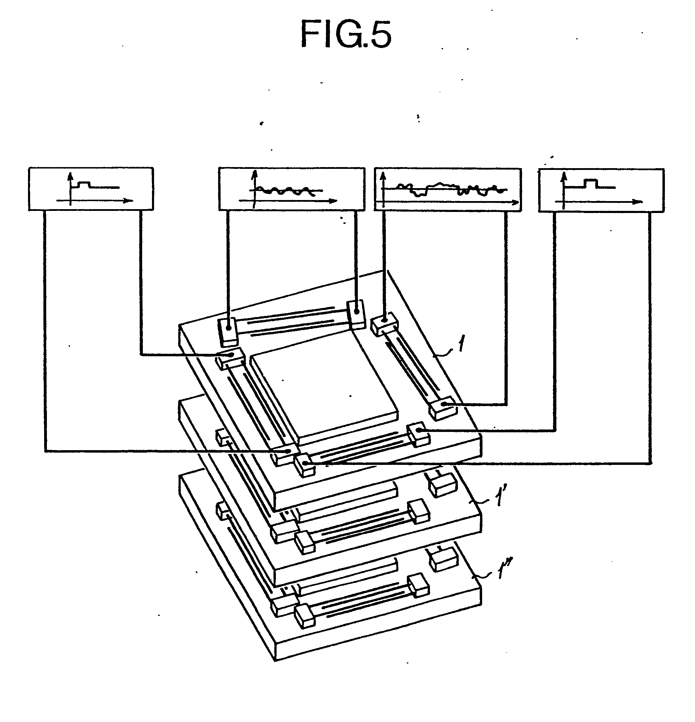

La vue schématique en perspective de la Fig. 5 montre comment en superposant trois écrans 1, 1' et 1'', suivant l'invention, dont les substrats sont transparents et dont les couches piézoluminophores respectives émettent dans trois couleurs fondamentales, on obtient un écran d'affichage en couleur. Bien entendu dans ce cas, une seule caméra suffit pour obtenir l'avance nécessaire sur les transducteurs 6 des trois écrans superposés.

Suivant l'invention, on peut également prévoir de déposer sur la surface du substrat d'un écran un réseau de lignes de piézoluminophores organisées en groupes de trois correspondant à trois couleurs fondamentales. On prévoit alors une source de modulation 10 capable de délivrer la modulation en fonction de la ligne de couleur balayée à cet instant. Bien entendu, le réseau de lignes est parallèle à la direction de balayage.

Il faut noter que si l'on superpose l'écran de la Fig. 1 et la caméra de la Fig. 4, on obtient un écran interactif, c'est à dire un dispositif permettant de désigner un point de l'image pour mesurer ses coordonnées. Dans ce cas, le signal de modulation est directement dû à l'interaction de l'objet désignant le point et de la surface de la caméra.

## Revendications

1. Système d'affichage d'un signal d'information sur écran plat utilisant un balayage bidimensionnel à ondes élastiques de surface, l'écran plat (1) étant constitué par un substrat piézoélectrique sur lequel sont lancées quatre ondes élastiques de surface, ledit substrat piézoélectrique (1) étant revêtu d'une couche de poudre piézoluminophore, caractérisé en ce que les directions ($\vec{a}_1$, $\vec{a}_2$, $\vec{a}_3$, $\vec{a}_4$) des quatre ondes élastiques de surface de pulsations ($\omega_1$, $\omega_2$, $\omega_3$, $\omega_4$) ne sont pas colinéaires deux à deux, lesdites directions et pulsations vérifiant la relation:

$$\omega_1\vec{a}_1 + \omega_2\vec{a}_2 + \omega_3\vec{a}_3 + \omega_4\vec{a}_4 = 0$$

les deux premières ondes ($\omega_1$, $\omega_2$) étant pulsées et de périodes de répétition d'impulsions légèrement différentes, la troisième onde ($\omega_3$) étant modulée par le signal d'information à afficher et la quatrième onde ($\omega_4$) étant d'amplitude constante, les deux premières ondes pulsées ($\omega_1$, $\omega_2$) étant lancées par rapport à la troisième onde modulée ($\omega_3$) avec un retard ($\tau$) déterminé par la distance à parcourir par la troisième onde modulée ($\omega_3$) pour atteindre le point d'interaction (14) desdites ondes de surface qui correspond au signal de modulation.

2. Système suivant la revendication 1, caractérisé en ce que la pulsation de la quatrième onde ($\omega_4$) est choisie de manière que le signal d'interaction entre les quatre ondes au point à afficher soit dans la partie la plus favorable de la caractéristique de luminescence de la poudre piézoluminophore.

3. Système suivant la revendication 1 ou 2, caractérisé en ce que l'écran se compose de trois écrans élémentaires (1, 1', 1'') à substrats transparents dont les poudres piézoluminophores émettent respectivement des couleurs fondamentales.

4. Système suivant la revendication 1 ou 2, caractérisé en ce que la couche de poudre piézoluminophore est divisée en groupes adjacents de trois lignes de poudres dont les compositions correspondent respectivement à l'émission de trois couleurs fondamentales.

5. Système suivant l'une des revendications 1 à 4, caractérisé en ce que le système d'affichage est complété par un dispositif de caméra plate (15) se composant d'un substrat piézoélectrique (18) revêtu d'électrodes (23), sur lequel sont lancées trois ondes de surface à pulsations ($\omega_1$, $\omega_2$, $\omega_4$) et directions ($\vec{a}_1$, $\vec{a}_2$, $\vec{a}_4$) correspondant aux deux premières et à la quatrième ondes de l'écran, un signal de pulsation ($\omega_0$) égale à la somme des pulsations des quatre ondes de l'écran étant appliqué aux électrodes (23), l'onde résultant de l'interaction des trois ondes de surface ($\omega_1$, $\omega_2$, $\omega_4$) et du signal étant recueillie par un transducteur de réception (21), perpendiculaire à la troisième direction ($\vec{a}_3$) dont le signal de sortie est appliqué, après modulation par l'information, au transducteur (6) lançant la troisième onde ($\omega_3$) de l'écran.

## Patentansprüche

1. System zur Anzeige einer Signalinformation auf einem flachen Bildschirm unter Verwendung einer zweidimensionalen Abtastung mit elastischen Oberflächenwellen, wobei der flache Bildschirm (1) durch ein piezoelektrisches Substrat gebildet wird, entlang dem vier elastische Oberflächenwellen geschickt werden, wobei das genannte piezoelektrische Substrat (1) mit einer Schicht aus piezoluminophorem Pulver bedeckt ist, dadurch gekennzeichnet, daß die Richtungen ($\vec{a}_1$, $\vec{a}_2$, $\vec{a}_3$, $\vec{a}_4$) der vier elastischen Oberflächenwellen mit den Pulsationen ($\omega_1$, $\omega_2$, $\omega_3$, $\omega_4$) paarweise nicht parallel sind, wobei die genannten Richtungen und Pulsationen die Beziehung verifizieren:

$$\omega_1\vec{a}_1 + \omega_2\vec{a}_2 + \omega_3\vec{a}_3 + \omega_4\vec{a}_4 = 0,$$

daß die beiden ersten Wellen ($\omega_1$, $\omega_2$) mit leicht unterschiedlicher Impulswiederholungsperiode gepulst werden, die dritte Welle ($\omega_3$) mit dem anzuzeigenden Informationssignal moduliert wird und die vierte Welle ($\omega_4$) eine konstante Amplitude hat, wobei die beiden ersten gepulsten Wellen ($\omega_1$, $\omega_2$) in bezug auf die dritte modulierte Welle ($\omega_3$) mit einer Verzögerung ($\tau$) losgeschickt werden, die durch die Strecke bestimmt ist, die durch die dritte modulierte Welle ($\omega_3$) zurückgelegt werden muß, um den Wechselwirkungspunkt (14) der genannten Oberflächenwellen zu erreichen, der dem Modulationssignal entspricht.

2. System nach Anspruch 1, dadurch gekennzeichnet, daß die Pulsation der vierten Welle ($\omega_4$) so gewählt ist, daß das Signal aus dem Zusammenwirken zwischen den vier Wellen am anzuzeigenden Punkt in dem günstigsten Teil der Lumineszenzcharakteristik des piezoluminophoren Pulvers liegt.

3. System nach Anspruch 1 oder 2, dadurch gekennzeichnet, daß der Bildschirm sich aus drei elementaren Schirmen (1, 1', 1'') aus transparenten Substraten zusammensetzt, deren piezoluminophore Pulver entsprechende Primärfarben aussenden.

4. System nach Anspruch 1 oder 2, dadurch gekennzeichnet, daß die Schicht aus piezoluminophorem Pulver in benachbarte Gruppen von drei Pulverlinien unterteilt ist, deren Zusammensetzung jeweils der Aussendung von drei Primärfarben entsprechen.

5. System nach einem der Ansprüche 1 bis 4, dadurch gekennzeichnet, daß das Anzeigesystem durch eine flache Kameraanordnung (15) ergänzt ist, die aus einem mit Elektroden (23) beschichteten piezoelektrischen Substrat (18) besteht, auf dem drei Oberflächenwellen mit den Pulsationen ($\omega_1$, $\omega_2$, $\omega_4$) und Richtungen ($\vec{a}_1$, $\vec{a}_2$, $\vec{a}_4$) entlanggeschickt werden, die den beiden ersten Wellen und der vierten Welle des Bildschirms entsprechen, daß den Elektroden (23) ein Signal mit einer Pulsation ($\omega_0$) gleich der Summe der Pulsationen der vier Wellen des Schirms zugeführt wird, wobei die aus dem Zusammenwirken der drei Oberflächen ($\omega_1$, $\omega_2$, $\omega_4$) und dem von einem Empfangswandler (21) gesammelten Signal resultierende Welle senkrecht zu der dritten Richtung ($\vec{a}_3$) ist, deren Ausgangssignal nach Modulation mit der Information dem Wandler (6) zugeführt wird, der die dritte Welle ($\omega_3$) des Bildschirms auf den Weg schickt.

## Claims

1. A flat screen information signal display system using a two-dimension elastic surface wave scanning wherein the flat screen (1) is made of a piezoelectric substrate along which four elastic surface waves are launched, said piezoelectric substrate (1) being coated with a layer of piezoluminophor powder, characterized in that the directions ($\vec{a}_1$, $\vec{a}_2$, $\vec{a}_3$, $\vec{a}_4$) of the four elastic surface waves of respective angular frequencies ($\omega_1$, $\omega_2$, $\omega_3$, $\omega_4$) are two by two nonparellel, said directions and angular frequencies verifying the relation:

$$\omega_1\vec{a}_1 + \omega_2\vec{a}_2 + \omega_3\vec{a}_3 + \omega_4\vec{a}_4 = 0$$

the first two waves ($\omega_1$, $\omega_2$) being modulated with slightly different pulses repetition periods, the third wave ($\omega_3$) being modulated by the information signal to be displayed and the fourth wave ($\omega_4$) having a constant amplitude, the first two modulated waves ($\omega_1$, $\omega_2$) being, with respect to the third modulated wave ($\omega_3$), launched with a delay ($\tau$) that is determined by the distance to be passed over by the third modulated wave ($\omega_3$) for reaching the interaction point (14) of said surface waves which the modulating signal corresponds to.

2. A system according to claim 1, characterized in that the angular frequency of the fourth wave ($\omega_4$) is so selected that the signal resulting from the interaction of the four waves at the point to be displayed is in the most favourable portion of the luminescence characteristics of the piezoluminophor powder.

3. A system according to claim 1 or 2, characterized in that the screen is made of three elementary screens (1, 1', 1'') made of transparent substrates whose piezoluminophor powder respectively emit primary colors.

4. A system according to claim 1 or 2, characterized in that the piezoluminophor powder layer is divided into adjacent groups of three powder lines whose compositions respectively correspond to the transmission of three primary colors.

5. A system according to one of claims 1—4, characterized in that the display system is supplemented by a device under the form of a flat camera (15) made of a piezoelectric substrate (18) coated with electrodes (23) whereon launched are three surface waves of angular frequencies ($\omega_1$, $\omega_2$, $\omega_4$) and directions ($\vec{a}_1$, $\vec{a}_2$, $\vec{a}_4$) corresponding to the first two waves and the fourth wave, a signal having an angular frequency ($\omega_0$) equal to the sum of the angular frequencies of the four waves of the screen being applied to the electrodes (23), the wave resulting from the interaction of the three surface waves ($\omega_1$, $\omega_2$, $\omega_4$) and the signal being collected by a receiver transducer (21) whose direction is normal to the third direction ($\vec{a}_3$) and output signal is applied, after having been modulated by the information, to the transducer (6) launching the third wave ($\omega_3$) of the screen.

FIG.1

FIG.2

# FIG.3

# FIG.4

# FIG.5